## Europäisches Patentamt

## European Patent Office

## Office européen des brevets

(19)

(11) **EP 1 686 103 A2**

(12) **EUROPÄISCHE PATENTANMELDUNG**

(43) Veröffentlichungstag:
**02.08.2006 Patentblatt 2006/31**

(51) Int Cl.:
***C04B 28/04*** *(2006.01)*    ***C04B 28/14*** *(2006.01)*
***C04B 28/06*** *(2006.01)*

(21) Anmeldenummer: **06001423.0**

(22) Anmeldetag: **24.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **31.01.2005 DE 102005004362**

(71) Anmelder: **Elotex AG**
**6203 Sempach Station (CH)**

(72) Erfinder: **Waser, Hanspeter**
**6024 Hildisrieden (CH)**

(74) Vertreter: **Hagemann, Heinrich et al**
**Meissner, Bolte & Partner**
**Postfach 86 03 29**
**81630 München (DE)**

(54) **Fliesenkleber-Zusammensetzung mit Leichtfüllstoff**

(57)    Hydraulisch abbindende Mörtelzusammensetzung, enthaltend mindestens eine hydraulisch abbindende Komponente, mindestens einen Leichtfüllstoff, mindestens einen Celluloseether, mindestens einen Abbindeverzögerer, sowie gegebenenfalls weitere zusätzliche Additive, insbesondere Füllstoffe und/ oder Dispersionspulver. Zudem ist eine Vormischung zur Herstellung einer hydraulisch abbindenden Mörtelzusammensetzung beschrieben, welche mindestens einen Leichtfüllstoff und mindestens einen Celluloseether und/ oder einen Abbindeverzögerer enthält. Durch das erfindungsgemässe Verhältnis dieser Komponenten können mit deutlich geringeren Leichtfüllstoffgehalten kosteneffizientere Mörtelformulierungen und/ oder verbesserte anwendungstechnische Eigenschaften, wie beispielsweise erhöhte Haftzugfestigkeiten und/ oder eine verlängerte Offene Zeit, erhalten werden. Die hydraulisch abbindende Mörtelzusammensetzung kann in Gips-, Gips-Kalk-, Kalk-Zement-, Zement- und/ oder Thermoputzen, Fliesenklebern, Mauermörteln, Vollwärmeschutzmörteln, Spachtelmassen, Selbstnivellierenden Fussbodenmassen oder Reparaturmörtel verwendet werden.

EP 1 686 103 A2

**Beschreibung**

Die Erfindung betrifft eine hydraulisch abbindende Mörtelzusammensetzung mit einem Gehalt an Leichtfüllstoffen, Celluloseethern und Abbindeverzögerern.

In der jüngeren Zeit werden bei der Formulierung von hydraulisch abbindenden Mörteln" wie Fliesenklebern, vermehrt Leichtfüllstoffe verwendet. Dadurch kann der Anmachwasserbedarf gesteigert und die Dichte des angerührten Mörtels reduziert werden, sodass eine leicht aufzutragende, sehr ergiebige Masse entsteht. Um solche Eigenschaften zu erhalten, werden in der Regel höhere Anteile von bis zu 20% oder mehr von den relativ teuren Leichtfüllstoffen eingesetzt.

EP 985 646 A1 beschreibt Portlandzement basierende Mauermörtel, welche Leichtzuschlag enthalten. Durch die Wahl der geeigneten Siebfraktion des dichten Gesteins wie auch des porigen Leichtzuschlages kann ein Mörtel zur Verfügung gestellt werden, welcher das Problem der Lochüberbrückung löst. Celluloseether und insbesondere Abbindeverzögerer können eingesetzt werden, sind aber nicht zwingend erforderlich.

EP 990 628 A1 beschreibt eine Trockenmörtelmischung zur Herstellung eines Leichtmauernassmörtels, welcher im wesentlichen Zement, Luftporenbildner und ausgewählte Leichtzuschlagstoffe wie Perlit und Blähglas enthält, wobei insbesondere die Schüttdichte und die Korngrösse des Perlits und Blähglas engen Kriterien genügen und immer zusammen in grösseren Mengen eingesetzt werden müssen. Dadurch wird ein Leichtmauermörtel erhalten, der die geforderten Druckfestigkeiten erfüllt und zusätzlich ein verbessertes Wärmedämmvermögen aufweist. Abbindeverzögerer werden nicht eingesetzt.

In EP 646 100 A1 wird ein Putz und/ oder ein Farbprodukt zum Einsatz auf einer Fassade beschrieben, enthaltend als hydraulisch abbindende Komponente nur Aluminatzement (Tonerdeschmelzzement). Um die dadurch sehr schnelle Hydratation zu verlangsamen, wird auch Trinatriumcitrat als Abbindeverzögerer eingesetzt. Als Füllstoffe können u.a. auch Leichtfüllstoffe eingesetzt werden, wobei der Füllstoffanteil mit 60 bis 95 Gew.% sehr hoch ist. Durch das schnelle Abbinden können Ausblühungen drastisch reduziert werden. Zwischen Füllstoffen und Leichtfüllstoffen wird nicht unterschieden, auch werden nur Mengenbereiche der einzelnen Komponenten und keine genauen Rezepturangaben angegeben.

Die DE 103 15 865 B3 beschreibt hydraulisch abbindende Fliesenkleber, welche eine Metakaolin-Komponente enthalten. Diese kann auch in Formulierungen mit Leichtfüllstoffen eingesetzt werden um die geforderten Haftzugfestigkeiten und Verformbarkeiten nach DIN EN 12002 von 2,5 mm oder mehr zu erhalten. Celluloseether und insbesondere Leichtfüllstoffe und Abbindeverzögerer sind nicht zwingend einzusetzen.

Es war die Aufgabe der vorliegenden Erfindung, eine hydraulisch abbindende Mörtelzusammensetzung bereitzustellen, in der die Wirkungsweise von Leichtfüllstoffen um ein Vielfaches erhöht wird, ohne Einbussen in den Frischmörteleigenschaften wie Verarbeitbarkeit, Standfestigkeit, Abbindeverhalten, hoher Ergiebigkeit und erhöhtem Anmachwasserbedarf hinnehmen zu müssen. Somit soll eine kosteneffiziente Formulierung bei gleichbleibenden Eigenschaften erreicht werden, was auch logistische Vorteile mit sich bringt, da der voluminöse Leichtfüllstoff durch beispielsweise kompakten Quarzsand ersetzt werden kann. Zudem soll es möglich sein, die Korrigierbarkeit, die Offene Zeit und/ oder die physikalischen Mörteleigenschaften wie Haftzugfestigkeiten und Horizontale Deformation des ausgehärteten Mörtels gegebenenfalls zu verbessern. Es soll auch eine Vormischung zur Verfügung gestellt werden, anhand derer der oder ein grosser Teil des Leichtfüllstoffes von Mörtelzusammensetzungen ersetzt werden kann, um die erwähnten Vorteile der Mörtelzusammensetzung auf einfache Weise auch bei schon bestehenden Formulierungen zu erzielen. Ein Anwender soll mittels einer solchen Vormischung eine Rezepturumstellung mit sehr geringen Entwicklungskosten vollziehen können, wobei die anwendungstechnischen Eigenschaften bei niedrigeren Rohstoff- und Herstellkosten gleich bleiben oder sogar noch verbessert werden sollen. Eine solche Vormischung soll auch dazu benutzt werden können, um das Eigenschaftsprofil von Mörtelrezepturen ohne Leichtfüllstoffe durch den Einsatz einer Vormischung ohne grossen Entwicklungsaufwand deutlich zu verbessern, sodass die typischen Verarbeitungseigenschaften für Leichtfüllstoff enthaltende Mörtel erhalten werden.

Überraschenderweise wurde nun gefunden, dass die Aufgabe mit einer hydraulisch abbindenden Mörtelzusammensetzung gelöst werden kann, die mindestens eine hydraulisch abbindende Komponente, mindestens einen Leichtfüllstoff, mindestens einen Celluloseether und mindestens einen Abbindeverzögerer enthält, wobei

a bei einem Anmachwasserbedarf von etwa 20 bis 45 Gew%, bezogen auf den Trockengehalt der Mörtelzusammensetzung,

a1 das Gewichtsverhältnis von Leichtfüllstoff zu Celluloseether etwa 0.001 : 1 bis 10 : 1 und

a2 das Gewichtsverhältnis von Abbindeverzögerer zu Celluloseether etwa 0.3 : 1 bis 10 : 1 beträgt und

b bei einem Anmachwasserbedarf von etwa 45% bis 100 Gew%, bezogen auf den Trockengehalt der Mörtelzusammensetzung,

b1 das Gewichtsverhältnis von Leichtfüllstoff zu Celluloseether etwa 0.01 : 1 bis 30 : 1 und

b2 das Gewichtsverhältnis von Abbindeverzögerer zu Celluloseether 0.07 : 1 bis 10 : 1 beträgt und

c. der eingesetzte Leichtfüllstoff ein Schüttgewicht von kleiner als etwa 600 g/ l hat und bei Raumtemperatur eine Wasseraufnahmekapazität von etwa 80 Gew% oder mehr besitzt.

In einer besonderen Ausführungsform kann eine Vormischung zur Herstellung einer hydraulisch abbindenden Mörtelzusammensetzung hergestellt werden, wobei die Vormischung mindestens einen Leichtfüllstoff, mindestens einen Celluloseether und mindestens einen Abbindeverzögerer, enthält, wobei

a das Gewichtsverhältnis von Leichtfüllstoff zu Celluloseether etwa 0.001 : 1 bis 100 : 1 und/ oder

b das Gewichtsverhältnis von Leichtfüllstoff zu Abbindeverzögerer etwa 0.01: 1 bis 100 : 1, insbesondere etwa 0.1 : 1 bis 75 : 1 beträgt und gegebenenfalls

c das Gewichtsverhältnis von Abbindeverzögerer zu Celluloseether etwa 0.07 : 1 bis 10 : 1 beträgt, sowie

d der eingesetzte Leichtfüllstoff ein Schüttgewicht von kleiner als etwa 600 g/ l hat und bei Raumtemperatur eine Wasseraufnahmekapazität von etwa 80 Gew% oder mehr besitzt.

Diese Vormischung kann in bestehenden Leichtfüllstoff enthaltenden Mörteln eingesetzt werden, wobei der ganze oder ein grosser Teil des Leichtfüllstoffs durch diese Vormischung ersetzt werden kann, wobei der Gewichtsanteil der Vormischung nur ein kleiner Bruchteil des Gewichtsanteils des Leichtfüllstoffes ist, der dadurch ersetzt wird. Eine geeignete Vormischung kann aber auch benutzt werden, um bestehende, nicht Leichtfüllstoff modifizierte Mörtel so zu verändern, dass deren Eigenschaftsprofil sich neu mit demjenigen von Leichtfüllstoff enthaltenden Mörteln vergleichen lässt. Hierzu ist lediglich ein geringer Anteil an Vormischung und eine leicht erhöhte Menge an Zement notwendig.

Die erfindungsgemässen hydraulisch abbindenden Mörtelzusammensetzungen enthalten eine oder mehrere hydraulisch abbindende Komponenten mit einem Anteil von etwa 5 bis 70 Gew%, insbesondere von etwa 10 bis 60 Gew%, ein oder mehrere Leichtfüllstoffe mit einem Anteil von etwa 0.1 bis 20 Gew%, insbesondere von etwa 0.5 bis 15 Gew%, ein oder mehrere Celluloseether mit einem Anteil von etwa 0.02 bis 3.0 Gew.%, insbesondere von etwa 0.05 bis 2.0 Gew.-%, ein oder mehrere Abbindeverzögerer mit einem Anteil von etwa 0.01 bis 2 Gew.-%, insbesondere etwa 0.02 bis 1 Gew%, ein oder mehrere Füllstoffe bzw. Zuschlagstoffe mit einem Anteil von etwa 0 bis 70 Gew%, insbesondere etwa 10 bis 60 Gew% und ein oder mehrere Dispersionspulver mit einem Anteil von etwa 0 bis 25 Gew%, insbesondere von etwa 0.5 bis 20 Gew%, bezogen auf die trockene Mörtelzusammensetzung. Blähmittel wie Aluminium-Pulver können in der Mörtelformulierung auch eingesetzt werden, sind aber weniger bevorzugt.

Die hydraulisch abbindende Komponenten sind insbesondere Portlandzement, z.B. nach EN 196 CEM I, II, III, IV und V, Calciumsulfat in Form von α- und/ oder β-Halbhydrat und/ oder Anhydrit, Tonerdeschmelzzement und/ oder Kalk, meist in der Form von Calciumhydroxid und/oder Calciumoxid. Bevorzugt sind mindestens eine zementäre Komponente, wobei hier insbesondere in Frage kommen rein Portlandzement basierte Systeme, oder eine Mischung aus Portlandzement, Tonerdeschmelzzement und Calciumsulfat. Als Füllstoff bzw. weiterer Füllstoff, demzufolge hier ein Zuschlagstoff, der nicht unter den Begriff "Leichtfüllstoff" fällt, werden vorzugsweise anorganische Füllstoffe bzw. anorganische Zuschlagstoffe mit einem Schüttgewicht von etwa 600 g/ l oder höher verwendet, welche dem Fachmann allgemein bekannt sind. Die bevorzugten Füllstoffe bzw. Zuschlagstoffe sind quarzitische und/ oder carbonatische Sande und/oder Mehle wie beispielsweise Quarzsand und/ oder Kalksteinmehl. Zur Vergütung der Mörtel können ein oder mehrere Dispersionspulver zugegeben werden. In Spezialfällen kann auch anstelle oder zusätzlich zum Dispersionspulver dem Trockenmörtel während der Anrührphase mit Wasser eine flüssige Polymerdispersion zugegeben werden. Die Dispersionspulver und die Polymerdispersionen sind Homo- und/ oder Copolymere auf Basis von $C_1$- bis $C_{20}$- Vinylester, insbesondere von $C_1$- bis $C_{12}$- Vinylester, Ethylen, Vinylchlorid, $C_1$- bis $C_{20}$- Alkylester der (Meth)Acrylsäure, insbesondere von $C_1$- bis $C_{12}$-Alkylester der (Meth)Acrylsäure, Acrylamid, Acrylnitril, Styrol, Styrol Derivate und/ oder Butadien.

Um die angestrebten Effekte zu erhalten, ist die Anwesenheit von einem oder von mehreren Abbindeverzögerern sehr wichtig. Die Auswahl und die Menge des Abbindeverzögerers richtet sich nach der individuellen Mörtelformulierung und kann auch von spezifischen Rohstoffen wie dem ausgewählten Zement abhängen. Damit wird nicht nur die Abbindegeschwindigkeit der hydraulischen Komponente geregelt, sondern es werden auch die Frischmörteleigenschaften des angerührten Mörtels optimiert. Geeignete Abbindeverzögerer sind $C_3$- bis $C_{20}$-Polyhydroxyverbindungen, insbesondere $C_4$- bis $C_{12}$-Polyhydroxyverbindungen wie zum Beispiel Zuckeralkoholverbindungen, zuckerartige Ligninsulfonate, Phosphate wie beispielsweise Monocalciumphosphat, Alkaliphosphate, insbesondere Natrium- und Kaliumphosphate, Alkaliphosphonate, Alkalipyrophosphate wie beispielsweise Tetranatriumpyrophosphat, Diphosphate wie beispielsweise Calciumdiphospat, Silikophosphonate, wasserlösliche Silikofluoride, insbesondere wie Magnesiumsilikofluorid, Borsäure, Alkaliborate, $C_1$- bis $C_{20}$-Carbonsäuren, insbesondere $C_2$- bis $C_{12}$-Carbonsäuren wie zum Beispiel Zitronensäure, Weinsäure, Adipinsäure, Gluconsäure, Gallussäure, Äpfelsäure, Tartronsäure, 2,4,6-Trihydroxybenzoesäure, Heptansäure und/ oder deren Alkali-, Erdalkali-, Ammoniumund/ oder Triethanolammoniumsalz, Zinkoxid, Polymethoxy-Polyphosphonsäure, Kondensationsprodukte von enzymatisch gewonnenen Proteinhydrolysaten, Carboxylgruppen-haltige Polymere wie polymerisierte Aminosäuren, Carboxylgruppen-substituierte polymere Zucker und modifizierte Polyacrylate mit relativ niedrigen Molmassen. Besonders bevorzugt sind $C_4$- bis $C_{12}$-Polyhydroxyverbindungen, wie zum Beispiel Sorbitol, Saccharose, Fructose und/ oder Glucose. Die Einsatzmenge des Abbindeverzögerers richtet sich nach dem gewählten Verzögerer, dem gewünschten Eigenschaftsprofil des Mörtels, insbesondere des Frischmörtels, sowie nach den gewählten Rohstoffen der Mörtelzusammensetzung. Sie beträgt etwa 0.01 bis 2 Gew%, insbesondere etwa 0.025 bis 1.5 Gew% und insbesondere etwa 0.05 bis 1 Gew%, bezogen auf die trockene Mörtelzusammensetzung.

Die Leichtfüllstoffe sind Additive die zur Herstellung von hydraulisch abbindenden Mörtelzusammensetzungen verwendet werden können. In Abgrenzung zu den Füllstoffen bzw. Zuschlagstoffen besitzen sie ein wesentlich niedrigeres Schüttgewicht, was dem angerührten Mörtel die leichte Verarbeitbarkeit gibt. Die erfindungsgemässen Leichtfüllstoffe haben ein Schüttgewicht von kleiner als etwa 600 g/ l, insbesondere kleiner als etwa 500 g/ l, ganz besonders kleiner als 400 g/ l. Zudem ist es wichtig, dass sie die Fähigkeit besitzen, Wasser zu absorbieren. Dieses Absorptionsverhalten kann einfach getestet werden, indem bei Raumtemperatur beispielsweise 10.0 g eines Leichtfüllstoffes in ein Becherglas eingewogen werden und anschliessend unter leichtem Rühren Wasser zugegeben wird, bis gerade keine klare Wasserphase erhalten wird. Vor der Messung wird die Mischung während 5 Minuten stehen gelassen. Daraus lässt sich einfach die Wasseraufnahmekapazität der einzelnen Leichtfüllstoffe berechnen:

$$\text{Wasseraufnahmekapazität (WAK; Gew\%)} = \frac{\text{Absorbierte Wassermenge (g)} * 100}{\text{Eingefüllte Leichtfüllstoffmenge (g)}}$$

In der Tabelle 1 sind die Wasseraufnahmekapazitäten einiger typischer Füllstoffe und Leichtfüllstoffe bzw. Zuschlagstoffe dargestellt.

**Tabelle 1:** Wasseraufnahmekapazität einiger typischer Füllstoffe und Leichtfüllstoffe.

| Füllstoff oder Leichtfüllstoff | WAK[*] (Gew%) | Schüttgewicht (g/l) |
|---|---|---|
| Aluminium-Eisen-Magnesium-Silikat | 114 | 120-140 |
| Aluminium-Siliciumoxid | 163 | 200 |
| Aluminium-Silikat | 128 | 180 |
| Aluminium-Silikat | 90 | 350-450 |
| Aluminium-Silikat | 63 | 450 |
| Aluminium-Silikat | 60 | 400-450 |
| Aluminium-Silikat | 91 | 350-450 |
| Aluminium-Silikathydrat | 716 | 54 |
| Calcium-Aluminium-Silikat | 142 | 400 |
| Calcium-Magnesium-Carbonat | 30 | 1280 |
| Calcium-Magnesium-Carbonat | 29 | 1200 |
| Calcium-Silikathydrat | 340 | 60 |
| Calcium-Silikathydrat | 123 | 340-490 |
| Calciumcarbonat | 33 | 1500 |
| Calciumcarbonat | 27 | 1800 |
| Calciumcarbonat | 25 | 1800 |
| Calciummetasilikat | 200 | 200-330 |
| Kieselsäureanhydrit + Kaolinit | 54 | 250 |

(fortgesetzt)

| Füllstoff oder Leichtfüllstoff | WAK* (Gew%) | Schüttgewicht (g/l) |
|---|---|---|
| Magnesium-Aluminium-Silikat-Hydrat | 53 | 660 |
| Magnesium-Aluminium-Silikat-Hydrat | 51 | 750 |
| Magnesium-Aluminium-Silikat-Hydrat | 42 | 870 |
| Magnesium-Silikat | 81 | 450 |
| Magnesium-Silikat-Hydrat | 48 | 720 |
| Siliciumdioxid | 180 | 150 |
| Siliciumdioxid | 77 | 600-700 |
| Siliciumdioxid | 71 | 200-300 |
| Siliciumoxid | 420 | 5 |
| Siliciumoxid | 30 | 1340 |
| Siliciumoxid | 27 | 1400 |
| * WAK = Wasseraufnahmekapazität | | |

Die erfindungsgemässen Leichtfüllstoffe besitzen bei Raumtemperatur eine Wasseraufnahmekapazität von etwa 80 Gew% oder mehr, insbesondere etwa 100 Gew% oder mehr und ganz besonders bevorzugt etwa 120 Gew% oder mehr. Ansonsten gibt es keinerlei Einschränkung bezüglich des oder der eingesetzten Leichtfüllstoffe. Sie können, um nur eine Auswahl zu nennen, auf synthetischer oder natürlicher Basis sein, wie Mirohohlkugeln aus Glas, Polymeren wie Polystyrolkugeln, Alumosilikaten, Siliciumoxid, Aluminium-Siliciumoxid, Calcium-Silikathydrat, Siliciumdioxid, Aluminium-Silikat, Magnesium-Silikat, Aluminium-Slikathydrat, Calcium-Aluminium-Silikat, Calcium-Silikathydrat, Aluminium-Eisen-Magnesium-Silikat, Calciummetasilikat und/ oder vulkanischer Schlacke. Die Form der Leichtfüllstoffe ist nicht beschränkt und kann insbesondere eine kugel-, plättchen-, stäbchen- und/ oder lamellenförmige Struktur aufweisen. Bevorzugte Leichtfüllstoffe sind Perlite, Cellite, Cabosil, Circosil, Eurocell, Fillite, Promaxon, Vermex und/ oder Wollastonite. Eine spezielle Ausführungsform ist die Verwendung von zwei verschiedenen Leichtfüllstoffen mit unterschiedlicher Form, beispielsweise ein Kombination von kugel- und plättchenförmiger oder von stäbchen- und lamellenförmiger Struktur.

Die Einsatzmengen der Leichtfüllstoffe liegen wegen der erfindungsgemäss stark erhöhten Wirkungsweise wesentlich niedriger als in den bekannten Rezepturen und hängen von den einzelnen Anwendungen wie auch von den gewünschten Eigenschaften ab. Zudem muss unterschieden werden zwischen hydraulisch abbindenden Mörtelzusammensetzungen die einen niedrigeren Anmachwassergehalt von etwa 20 bis 45 Gew%, bezogen auf den Trockengehalt der Mörtelzusammensetzung, und solchen, die einen erhöhten Anmachwassergehalt von etwa 45 bis 100 Gew% brauchen, um die gewünschte Konsistenz zu erreichen. Bei der ersten Kategorie wird der Leichtfüllstoff vorzugsweise in einer Menge von etwa 0.1 bis 5 Gew%, insbesondere von etwa 0.2 bis 3 Gew%, und ganz besonders bevorzugt von etwa 0.5 bis 2 Gew%, bezogen auf die trockene Mörtelzusammensetzung, eingesetzt. Bei der zweiten Kategorie wird der Leichtfüllstoff vorzugsweise in einer Menge von etwa 1 bis 15 Gew%, insbesondere von etwa 2 bis 10 Gew%, und ganz besonders bevorzugt von etwa 3 bis 7.5 Gew%, bezogen auf die trockene Mörtelzusammensetzung, eingesetzt.

Es können ein oder mehrere Celluloseether eingesetzt werden. Bevorzugt sind sie ausgewählt aus den Gruppen der Alkylhydroxyalkylcelluloseether und/ oder Alkylcelluloseether, können aber auch eine anderweitige Modifikation aufweisen. Dabei ist wichtig, dass die den Celluloseether-typischen Eigenschaften erhalten bleiben oder sogar noch übertroffen werden. Die Alkyl-Gruppen der Alkylhydroxyalkylcelluloseether und/ oder der Alkylcelluloseether sind bevorzugt Methyl-, Ethyl- und/ oder Propyl-Gruppen und die Hydroxyalkyl- Gruppen des Alkylhydroxyalkylcelluloseethers sind bevorzugt Hydroxymethyl-, Hydroxyethyl- und/ oder Hydroxypropyl- Gruppen. Die Viskosität der zu verwendenden Celluloseether ist ein wichtiges Kriterium um die rheologischen Eigenschaften des Frischmörtels zu bestimmen. Die Brookfieldviskosität gemessen bei 20RPM und als 2%ige wässrige Lösung bei 20°C beträgt etwa 100 bis 100'000 mPas, insbesondere etwa 1000 bis 75'000 mPas, und ganz besonders bevorzugt etwa 5'000 bis 50'000 mPas. Dabei hängt die Viskosität des einzusetzenden Celluloseethers stark von der Anwendung ab. So werden bei Nivelliermassen bevorzugt sehr niederviskose Celluloseether eingesetzt, während beispielsweise bei Anwendungen, wo eine standfeste Rheologie gefordert ist, wie z.B. bei Fliesenklebern für die Wand, mittel- bis höherviskose Celluloseether bevorzugt werden. Die Celluloseether können auch durch geeignete Additive modifiziert sein. Dem Fachmann ist es bestens bekannt wie er anhand der Auswahl des Celluloseethers die Frischmörteleigenschaften seinen Bedürfnissen genau anpassen kann.

Unter die Kategorie der Celluloseether fallen erfindungsgemäss auch Verbindungen, die chemisch gesehen keine Celluloseether sind, die jedoch im angerührten Mörtel Celluloseether-typische Eigenschaften aufweisen wie beispielsweise eine scherverdünnende Rheologie, gute Luftporenstabilität und eine hohe Wasserretention. Solche Verbindungen mit Celluloseether-ähnlichen Eigenschaften sind dem Fachmann bekannt und werden bevorzugt als Teilersatz und teilweise auch als Vollersatz von Celluloseethern eingesetzt. Sie basieren in der Regel auf natürlichen Polysacchariden wie beispielsweise Alkylhydroxyalkylguarether, wobei die Alkyl- und hydroxyalkylGruppen die gleichen sind wie diejenigen der Celluloseether, oder synthetischen Polysacchariden wie anionische, nonionische oder kationische Heteropolysaccharide, insbesondere Xanthan Gum oder Wellan Gum.

Es wurde nun überraschenderweise gefunden, dass bei geeigneter Auswahl des Leichtfüllstoffes die Gewichtsverhältnisse von Leichtfüllstoff zu Celluloseether und von Abbindeverzögerer zu Celluloseether eine grosse Rolle spielen. Bei gleichbleibenden oder sogar verbesserten Mörteleigenschaften und gleichzeitiger Kostenreduktion kann die Menge an eingesetztem Leichtfüllstoff drastisch reduziert werden, sofern bei einem Anmachwassergehalt von etwa 20 bis 45 Gew%, bezogen auf den Trockengehalt der Mörtelzusammensetzung, ein Gewichtsverhältnis von Leichtfüllstoff zu Celluloseether von etwa 0.001 : 1 bis 10 : 1, insbesondere von etwa 0.01 : 1 bis 7.5 : 1 und ganz besonders bevorzugt von etwa 0.1 : 1 bis 5 : 1, und ein Gewichtsverhältnis von Abbindeverzögerer zu Celluloseether von etwa 0.3 : 1 bis 10 : 1, insbesondere von etwa 0.4 : 1 bis 7.5 : 1 und ganz besonders bevorzugt von etwa 0.5 : 1 bis 5 : 1 gewählt wird. Bei einem Anmachwassergehalt von etwa 45 bis 100 Gew%, bezogen auf den Trockengehalt der Mörtelzusammensetzung beträgt das Gewichtsverhältnis von Leichtfüllstoff zu Celluloseether etwa 0.01 : 1 bis 30 : 1, insbesondere von etwa 0.1 : 1 bis 25 : 1 und ganz besonders bevorzugt von etwa 1 : 1 bis 15 : 1, und ein Gewichtsverhältnis von Abbindeverzögerer zu Celluloseether von etwa 0.07 : 1 bis 10 : 1, insbesondere von etwa 0.09 : 1 bis 7.5 : 1 und ganz besonders bevorzugt von etwa 0.12 : 1 bis 5 : 1.

In einer besonderen Ausführungsform wird zunächst eine Vormischung hergestellt, welche dann vor, während oder nach dem Herstellprozess der hydraulisch abbindenden Mörtelzusammensetzung dieser zugegeben werden kann. Der Vorteil einer solchen Vormischung liegt darin, dass wichtige Additive anhand einer Vormischung viel genauer zudosiert werden können. Eine solche Vormischung kann hergestellt werden, indem der erfindungsgemässe Leichtfüllstoff, der Abbindeverzögerer und/ oder der Celluloseether, sowie gegebenenfalls weitere Komponenten wie beispielsweise Dispersionspulver, miteinander vermischt werden. Es kann auch nur ein Teil einer solchen Komponente mit einer anderen vorgemischt werden, so dass ein Teil der jeweiligen Komponenten für die hydraulisch abbindende Mörtelzusammensetzung während des Herstellprozesses und der andere Teil mittels der Vormischung zugegeben wird. Zum Beispiel kann der Abbindeverzögerer oder ein Teil davon oder der Celluloseether oder ein Teil davon dem Leichtfüllstoff oder dem Dispersionspulver zugegeben werden. Oder der Leichtfüllstoff kann mit dem ganzen Anteil oder einer Teilmenge des Abbindeverzögerers und/ oder mit dem ganzen Anteil oder einer Teilmenge des Celluloseethers zusammengemischt werden. Als Vormischung bevorzugt ist eine Mischung von Leichtfüllstoff und Celluloseether und/ oder Abbindeverzöger, wobei jeweils der gesamte Anteil oder nur eine Teilmenge der jeweiligen Komponente zugegeben werden kann.

Da die Vormischung wie auch die Mörtelmischung, zu der die Vormischung gegeben wird, Celluloseether, Leichtfüllstoff und Abbindeverzögerer enthalten können, ist es möglich, dass die Vormischung wie auch die Mörtelmischung vor Zugabe der Vormischung andere Verhältnisse von Leichtfüllstoff zu Celluloseether und von Abbindeverzögerer zu Celluloseether enthalten kann als die endgültige Mörtelmischung. In einer bevorzugten Ausführungsform werden in der Vormischung andere Leichtfüllstoffe, Celluloseether und/ oder Abbindeverzögerer eingesetzt als in der Mörtelmischung vor Zugabe der Vormischung, da damit das Eigenschaftsprofil des Mörtels weiter optimiert wird. Eine andere, weitere bevorzugte Ausführungsform ist, dass die ganze Menge an Leichtfüllstoff und/ oder Abbindeverzögerer zur Vormischung gegeben werden, um die ganze Herstellung der Mörtelformulierung zu vereinfachen. Wird als Celluloseether eine Celluloseether-ähnliche Verbindung wie natürliche oder synthetische Polysaccharide eingesetzt, wird bevorzugt die Celluloseether-ähnliche Verbindung in der Vormischung eingesetzt, kann aber auch, eventuell in Kombination mit Celluloseethern, der Mörtelmischung direkt zugegeben werden. Um diese Flexibilität in der Ausführung zu haben, ist es wichtig, dass die gewählten Verhältnisse für die Vormischung breiter gewählt werden als in der fertigen Mörtelformulierung. Auch hängen die Verhältnisse weniger vom Anmachwasserbedarf ab, da dieser vor allem von der ganzen Formulierung, insbesondere von der Einsatzmenge der Vormischung abhängt. So kann für die Vormischung das Gewichtsverhältnis von Leichtfüllstoff zu Celluloseether etwa 0.001: 1 bis 100 : 1, insbesondere etwa 0.01 : 1 bis 75 : 1 und ganz besonders etwa 0.1: 1 bis 50 : 1, das Gewichtsverhältnis von Leichtfüllstoff zu Abbindeverzögerer etwa 0.01: 1 bis 100 : 1, inbesondere etwa 0.1 : 1 bis 75 : 1 und ganz besonders etwa 1: 1 bis 50 : 1, und das Gewichtsverhältnis von Abbindeverzögerer zu Celluloseether etwa 0.07 : 1 bis 10 : 1, insbesondere etwa 0.12 : 1 bis 7.5 : 1 und ganz besonders etwa 0.15 : 1 bis 5 : 1 betragen. Der in der Vormischung eingesetzte Leichtfüllstoff unterliegt bezüglich Schüttgewicht und Wasseraufnahmekapazität den gleichen Kriterien wie derjenige bezüglich der ganzen Mörtelmischung.

Der hydraulisch abbindende Mörtelzusammensetzung und/ oder der Vormischung können zudem noch weitere Additive in den üblichen Mengen zugegeben werden. Solche Additive sind dem Fachmann bekannt und in der Literatur beschrieben. Ausgewählte Beispiele sind Füllstoffe bzw. Zuschlagstoffe, Dispersionspulver, Stärkeether, Polycarboxylate, Polyacrylamide, Cellulosefaser, Luftporenbildner, Schichtsilikate, Puzzolane wie Metakaolin, Abbindebeschleuniger, insbesondere Erstarrungsbeschleuniger, latenthydraulische Komponenten und/ oder Verdickungsmittel.

Durch die stark erhöhte Wirkung des eingesetzten erfindungsgemässen Verhältnisses von Leichtfüllstoff und Celluloseether und/ oder Abbindeverzögerer erhält die hydraulisch abbindende Mörtelzusammensetzung vielfältige Vorteile. Neben reduzierten Rohstoff- und/ oder Herstellkosten sind dies verbesserte anwendungstechnische Eigenschaften wie beispielsweise eine verbesserte Offene Zeit, eine leichte Verarbeitbarkeit, eine hohe Ergiebigkeit, sofern erwünscht eine gute Standfestigkeit, höhere Haftzugfestigkeiten auch nach Nass-, Wärme- und Frost-Tau-Lagerung, und/oder eine verbesserte Horizontale Deformation. Hierdurch kann die erfindungsgemässe hydraulisch abbindende Mörtelzusammensetzung für die verschiedensten Gips- und/oder zementbasierten Mörteln und Putzen optimiert werden wie beispielsweise Fliesenkleber, Mauermörtel, Putze wie Gips-, Gips-Kalk-, Kalk-Zement-, Zement- und/oder Thermoputz, Vollwärmeschutzmörteln, Spachtelmassen, Selbstnivellierenden Fussbodenmassen, Reparaturmörtel, oder Mörtel für Holz Anwendungen wie auf Spanplatten oder Sperrholzplatten.

Die erfindungsgemässe Vormischung findet in allen erfindungsgemässen hydraulisch abbindenden Mörteln Anwendung. Die Vorteile einer solchen Vormischung sind, neben den erwähnten Vorteilen der erfindungsgemässen hydraulisch abbindenden Mörtelzusammensetzung, vielfältig. So wird das Herstellverfahren stark vereinfacht, muss doch nur eine Komponente zugegeben werden anstelle derer drei oder mehr. Dies macht nicht nur die Herstellung einfacher, sondern auch die Logistik wird stark vereinfacht. Auch ist es anhand des erfinderischen Verfahrens einfach möglich, eine nicht erfinderische Rezeptur einfach anzupassen. So kann beispielsweise der hohe Anteil an Leichtfüllstoff ganz durch den viel kleineren Anteil an Vormischung ausgetauscht werden, um die genannten Vorteile zu erhalten. Oder einer Rezeptur ohne Leichtfüllstoff kann lediglich durch die Zugabe einer geringen Menge an Vormischung und leichte Erhöhung des Zementanteils, aber ohne weitere grosse Anpassung leicht zu einem qualitativ hochwertigeren Produkt mit verbesserter Offenen Zeit, viel leichterer Verarbeitbarkeit, verbesserter Ergiebigkeit, sofern erwünscht guter Standfestigkeit, verbesserten Haftzugfestigkeiten, auch nach Nass-, Wärme- und Frost-Tau-Lagerung, sowie auch mit verbesserter Horizontalen Deformation.

Im Folgenden werden anhand von nicht limitierenden Ausführungsbeispielen die Vorteile der Erfindung dargestellt.

<u>Herstellung von Vormischungen:</u> Die in der Tabelle 2 aufgeführten Komponenten zur Herstellung von 300 g einer Vormischung wurden in ein 1 lt Gefäss exakt eingewogen und mit einem 60 mm Propellerrührer während einer Minute bei 300 bis 1000 Upm gerührt.

Tabelle 2: Zusammensetzung (in Gew%) der eingesetzten Vormischungen:

| Vormischung | 1 | 2 | 3 | 4 | 5 | 6 | 7 |
|---|---|---|---|---|---|---|---|
| Aluminium-Silikat (Füllstoff; WAK=60)* | 46.0 | 50.0 | 48.0 | 0.0 | 0.0 | 0.0 | 0.0 |
| Calcium-Silikathydrat (WAK=340) | 42.0 | 42.0 | 42.0 | 0.0 | 0.0 | 0.0 | 0.0 |
| Calcium-Silikathydrat (WAK=123) | 0.0 | 0.0 | 0.0 | 93.5 | 93.5 | 64.5 | 68.0 |
| Aluminium-Silikat (WAK=128) | 0.0 | 0.0 | 0.0 | 0.0 | 0.0 | 31.0 | 27.3 |
| Abbindeverzögerer 1 | 8.0 | 4.0 | 6.0 | 0.0 | 0.0 | 1.5 | 1.5 |
| Abbindeverzögerer 2 | 0.0 | 0.0 | 0.0 | 2.0 | 2.0 | 0.0 | 0.0 |
| Celluloseether (10'000 mPas) ** | 2.5 | 2.5 | 2.5 | 0.0 | 3.0 | 2.0 | 2.2 |
| Celluloseether (25'000 mPas) ** | 0.0 | 0.0 | 0.0 | 3.0 | 0.0 | 0.0 | 0.0 |
| Stärkeether (Eloset 5420) | 1.5 | 1.5 | 1.5 | 1.5 | 1.5 | 1.0 | 1.0 |
| * Diese Aluminium-Silikat wird hier als Füllstoff bezeichnet, da er nicht die geforderte Wasseraufnahmekapazität der erfindungsgemäßen Leichtfüllstoffe besitzt. ** Celluloseether, welche als 2%ige wässrigen Lösung eine Brookfieldviskosität von 10'000 mPas resp. 25'000 mPas besitzen. | | | | | | | |

<u>Beschreibung der anwendungstechnischen Tests</u>: Für die anwendungstechnischen Prüfungen wurden jeweils 300 g Trockenmörtelmischung gemäss den Rezepturen in den Beispielen 1 bis 5 hergestellt, wobei die Trokkenmischung in einem 1 Liter Gefäss mit einem Rührer gut durchmischt wurde. Anschliessend wurde die angegebene Menge Anmachwasser unter Rühren zugegeben und während 60 Sekunden mit einem 60mm Propellerrührer mit einer Geschwindigkeit von ca 950 Upm angerührt. Dabei wurde der Mörtel bezüglich Anrührverhalten (Knollenbildung und Benetzbarkeit) beurteilt. Nach einer Reifezeit von 3 Minuten wurde der Mörtel von Hand nochmals kurz aufgerührt, wobei die Konsistenz (sämig, dünn, hochviskos, trocken) und deren Veränderung während der Reifezeit (dickt nach) beurteilt wurde.

Zur Messung der Haftzugfestigkeiten und der Offenen Zeit wurde pro Lagerung auf eine Betonplatten nach einem 0-Abstrich der Mörtel mit einem 6x6x6mm Kammspachtel im 60°-Winkel appliziert. Dabei wurde die Verarbeitbarkeit (Applizierbarkeit, Benetzbarkeit, Aufreissen der Oberfläche) beurteilt. Nach einer Einlegezeit (EZ) von 5 Minuten (Haftzugfestigkeiten) resp. 20 oder 30 Minuten (Offene Zeit, OT) wurden 5x5 cm Fliesen von Hand ins Mörtelbett eingelegt und 30 Sekunden lang mit 2 kg beschwert. Die Messung der Haftzugfestigkeiten (gemäss CEN EN 1348) erfolgte mit Steinzeugfliesen nach der jeweiligen Lagerung ("trocken": 28 Tage bei 23°C und 50% relativer Feuchtigkeit, "nass": 7 Tage trocken gelagert und anschliessend 21 Tage im Wasserbad), die Offene Zeit (Steingutfliesen, gemäss CEN EN 1346) wurde nach 28 Tage Trockenlagerung ermittelt.

Die Horizontale Deformation wurde gemäss EN12002 ermittelt, wobei die Probekörper bei 23°C gelagert wurden. Die relative Feuchtigkeit wurde für die ersten 14 Tage auf 100% und für die nächsten 14 Tage auf 50% eingestellt.

Zur Bestimmung der Korrigierbarkeit nach DIN 18156 Teil 3 wurde der angerührte Mörtel zunächst wie bei Haftzugfestigkeitstests auf eine Betonplatte appliziert. Die eingedrückte Steinzeugfliese wurde jedoch nach fünf Minuten von Hand leicht um einen 45° Winkel in eine Richtung und wieder zurück gedreht. Nach weiteren fünf Minuten wurde dies wiederholt, bis die Fliese abgefallen ist. Die angegebene Zeit entspricht der Zeit, bei der die Fliese das letzte mal ohne abzufallen gedreht werden konnte.

Zur Ermittlung der Ergiebigkeit wurde zunächst das Volumen eines 180 ml Gefässes mittels Wasserfüllung exakt bestimmt. Der angerührte Mörtel wurde anschliessend in das Gefäss gefüllt, wobei darauf geachtet wurde, dass keine Lufteinschlüsse ermöglicht wurden. Der Quotient des Mörtelgewichts zum Gefässvolumen gibt die Ergiebigkeit des Mörtels an, wobei dem Mörtelgewicht der Anteil Anmachwasser abgezogen wurde.

**Beispiele und Vergleichsbeispiele:** Anhand der Beispiele werden die Vorteile der Erfindung erläutert. Steht eine Vormischung zur Verfügung, kann einfach ein Teil oder der ganze Anteil an Leichtfüllstoff durch einen wesentlich geringeren Anteil an Vormischung ersetzt werden. Die Beispiele zeigen, dass mit den erfindungsgemässen Mörtelformulierungen die Wirkungsweise des Leichtfüllstoffes wesentlich erhöht wird, sodass in der Regel gleich gute oder zum Teil sogar noch bessere anwendungstechnische Eigenschaften erzielt werden, dies bei teilweise sogar erniedrigten Rohstoffkosten.

Die Haftzugfestigkeiten nach einem Tag zeigen, dass das Abbindeverhalten des Mörtels durch die erhöhten Werte an Abbindeverzögerer nicht gestört wird. Teilweise weisen die 24-Std Werte noch bessere Adhäsionswerte auf als die Vergleichsversuche mit weniger oder keinem Verzögerer.

Durch geeignete Wahl der Verhältnisse von Leichtfüllstoff zu Celluloseether und Abbindeverzögerer zu Celluloseether können bei gleich guten Frischmörteleigenschaften z.T. wesentlich verbesserte Haftzugsfestigkeiten, verbesserte Offene Zeit und verbesserte Korrigierbarkeit erhalten werden. Teurer Leichtfüllstoff wird im Wesentlichen durch billigen Füllstoff bzw. Zuschlagstoff wie Quarzsand ersetzt. Auch kann der Gehalt an Celluloeether gegebenenfalls sogar reduziert werden (Bsp. 4a und 6), was zu einer deutlich kosteneffizienteren Formulierung führt.

**Vergleichsbeispiel (V-Bsp.) 1 und Beispiel (Bsp.) 1:**

|  | V-Bsp. 1 | Bsp. 1 |
| --- | --- | --- |
| Portland Zement CEM I 52.5 | 40.0 | 40.0 |
| Quarzsand 0.1 - 0.3 mm | 50.0 | 54.0 |
| Aluminium-Silikat (WAK = 128) | 6.0 | 0.0 |
| Erhärtungsbeschleuniger | 1.0 | 1.0 |
| Celluloseether (Visk: 20'000 mPas) | 0.4 | 0.4 |
| Dispersionspulver (Elotex 50E100) | 2.5 | 2.5 |
| Abbindeverzögerer 3 | 0.1 | 0.1 |
| Vormischung 1 |  | 2.0 |
| Anmachwasser | 30.0 | 30.0 |
| Leichtfüllstoff auf Trockenmörtel [%] | 6.0 | 0.84 |
| Abbindeverzögerer auf Trockenmörtel [%] | 0.1 | 0.26 |
| Celluloseether auf Trockenmörtel [%] | 0.4 | 0.45 |
| Verhältnis Leichtfüllstoff zu CE | 15.0 | 1.87 |

(fortgesetzt)

| | | V-Bsp. 1 | Bsp. 1 |
|---|---|---|---|
| Verhältnis Abbindeverzögerer zu CE | | 0.25 | 0.58 |
| Anrührverhalten | | Gut | Gut |
| Konsistenz | | Leicht, sämig | Leicht, sämig |
| Verarbeitbarkeit | | Gut | Gut |
| Haftzugfestigkeiten [N/mm$^2$] (CEN EN 1348) | trocken (28d) | 0.65 | 0.78 |
| | nass (7+21d) | 0.64 | 0.72 |
| OT (CEN EN 1346) EZ 20 min [N/mm$^2$] | 28 d | 0.26 | 0.36 |

**Vergleichsbeispiel (V-Bsp.) 2 und Beispiele (Bsp.) 2:**

| | | V-Bsp. 2 | V-Bsp. 2a | Bsp. 2 | Bsp. 2a |
|---|---|---|---|---|---|
| Portland Cement Cem I 52.5 | | 40.0 | 40.0 | 40.0 | 40.0 |
| Quarzsand 0.1- 0.3mm | | 50.0 | 50.1 | 54.0 | 54.1 |
| Aluminium-Siliciumoxid (WAK = 163) | | 6.0 | 6.0 | | |
| Erhärtungsbeschleuniger | | 1.0 | 1.0 | 1.0 | 1.0 |
| Celluloseether (Visk: 20'000 mPas) | | 0.4 | 0.4 | 0.4 | 0.4 |
| Dispersionspulver (Elotex 50E100) | | 2.5 | 2.5 | 2.5 | 2.5 |
| Abbindeverzögerer 3 | | 0.1 | | 0.1 | |
| Vormischung 1 | | | | 2.0 | 2.0 |
| Anmachwasser | | 30.0 | 30.0 | 28.0 | 28.0 |
| Leichtfüllstoff auf Trockenmörtel [%] | | 6.0 | 6.0 | 0.84 | 0.84 |
| Abbindeverzögerer auf Trockenmörtel [%] | | 0.1 | 0 | 0.26 | 0.16 |
| Celluloseether auf Trockenmörtel [%] | | 0.4 | 0.4 | 0.45 | 0.45 |
| Verhältnis Leichtfüllstoff zu CE | | 15.0 | 15.0 | 1.87 | 1.87 |
| Verhältnis Abbindeverzögerer zu CE | | 0.25 | 0 | 0.58 | 0.36 |
| Anrührverhalten | | Gut | Gut | Gut | Gut |
| Konsistenz | | Leicht, sämig | Leicht, sämig | Leicht, sämig | Leicht, sämig |
| Verarbeitbarkeit | | Gut | Gut | Gut | Gut |
| Haftzugfestigkeiten [N/mm$^2$] (CEN EN 1348) | trocken 1 d | 0.23 | 0.35 | 0.78 | 0.32 |
| | trocken (28d) | 0.62 | 0.79 | 1.21 | 0.77 |
| | nass (7+21d) | 0.46 | 0.73 | 0.76 | 0.57 |
| OT (CEN EN 1346) EZ 20 min [N/mm$^2$] | 28 d | 0.41 | 0.57 | 0.54 | 0.29 |
| Korrigierbarkeit (DIN 18156 Teil 3) [min] | | 15 | 15 | 30 | 20 |
| Ergiebigkeit [g/cm$^3$] | | 1.13 | 1.15 | 1.14 | 1.18 |

**Vergleichsbeispiel (V-Bsp.) 3 und Beispiel (Bsp.) 3:**

| | V-Bsp. 3 | Bsp. 3 |
|---|---|---|
| Portland Cement Cem I 52.5 | 40.0 | 40.0 |
| Quarzsand 0.1- 0.3mm | 46.0 | 54.0 |
| Calcium-Aluminium-Silikat (WAK = 142) | 10.0 | |
| Erhärtungsbeschleuniger | 1.0 | 1.0 |
| Celluloseether (Visk: 20'000 mPas) | 0.4 | 0.4 |
| Dispersionspulver (Elotex 50E100) | 2.5 | 2.5 |
| Abbindeverzögerer 3 | 0.1 | 0.1 |
| Vormischung 2 | | 2.0 |
| Anmachwasser | 30.0 | 30.0 |
| Leichtfüllstoff auf Trockenmörtel [%] | 10.0 | 0.84 |
| Abbindeverzögerer auf Trockenmörtel [%] | 0.1 | 0.18 |
| Celluloseether auf Trockenmörtel [%] | 0.4 | 0.45 |
| Verhältnis Leichtfüllstoff zu CE | 25.0 | 1.87 |
| Verhältnis Abbindeverzögerer zu CE | 0.25 | 0.40 |
| Anrührverhalten | Gut | Gut |
| Konsistenz | Leicht, sämig | Leicht, sämig |
| Verarbeitbarkeit | Gut | Gut |
| Haftzugfestigkeiten [N/mm$^2$] (CEN EN 1348) | trocken 1 Tag | 0.26 | 0.41 |
| | trocken (28d) | 0.48 | 0.84 |
| | nass (7+21d) | 0.65 | 0.97 |
| OT (CEN EN 1346) EZ 20 min [N/mm$^2$] | 1 d | 0.15 | 0.23 |
| | 28 d | 0.36 | 0.64 |
| Ergiebigkeit [g/cm$^3$] | 1.12 | 1.15 |

Vergleichsbeispiel (V-Bsp.) 4 und Beispiele (Bsp.) 4 und 4a:

| | V-Bsp. 4 | Bsp. 4 (CE Gehalt gleich) | Bsp. 4a (CE Gehalt reduziert) |
|---|---|---|---|
| Portland Cement Cem I 52.5 | 40.0 | 40.0 | 40.0 |
| Quarzsand 0.1- 0.3mm | 46.0 | 53.0 | 53.14 |
| Calcium-Aluminium-Silikat (WAK = 142) | 10.0 | | |
| Erhärtungsbeschleuniger | 1.0 | 1.0 | 1.0 |
| Celluloseether (Visk: 20'000 mPas) | 0.4 | 0.4 | 0.26 |
| Dispersionspulver (Elotex 50E100) | 2.5 | 2.5 | 2.5 |
| Abbindeverzögerer 3 | 0.1 | 0.1 | 0.1 |
| Vormischung 3 | | 3.0 | 3.0 |
| Anmachwasser | 25.0 | 28.3 | 28.3 |
| Leichtfüllstoff auf Trockenmörtel [%] | 10.0 | 1.26 | 1.26 |
| Abbindeverzögerer auf Trockenmörtel [%] | 0.1 | 0.28 | 0.28 |

(fortgesetzt)

| | | V-Bsp. 4 | Bsp. 4 (CE Gehalt gleich) | Bsp. 4a (CE Gehalt reduziert) |
|---|---|---|---|---|
| Celluloseether auf Trockenmörtel [%] | | 0.4 | 0.48 | 0.34 |
| Verhältnis Leichtfüllstoff zu CE | | 25.0 | 2.63 | 3.71 |
| Verhältnis Abbindeverzögerer zu CE | | 0.25 | 0.58 | 0.82 |
| Anrührverhalten | | Gut | Gut | Gut |
| Konsistenz | | Leicht, sämig | Leicht, sämig | Leicht, sämig |
| Verarbeitbarkeit | | Gut | Gut | Gut |
| Haftzugfestigkeiten (CEN EN 1348) [N/mm$^2$] | trocken 1 d | 0.17 | | 0.23 |
| | trocken (28d) | 1.03 | 1.12 | 1.28 |
| | nass (7+21d) | 0.95 | 0.49 | 1.22 |
| OT (CEN EN 1346) EZ 20 min [N/mm$^2$] | 28 d | 0.13 | 0.57 | 0.59 |
| Korrigierbarkeit (DIN 18156 Teil 3) [min] | | 15 | 15 | 10 |
| Ergiebigkeit [g/cm$^3$] | | 1.14 | 1.14 | 1.17 |

**Vergleichsbeispiele (V-Bsp.) 5 und 5a sowie Beispiele (Bsp.) 5 und 5a:**

| | V-Bsp. 5 | V-Bsp. 5a | Bsp.5 | Bsp.5a |
|---|---|---|---|---|
| Portland Cement Cem I 52.5 | 50.0 | 50.0 | 50.0 | 50.0 |
| Microzement | 4.0 | 4.0 | 4.0 | 4.0 |
| Quarzsand 0.1- 0.3mm | 19.77 | 19.80 | 26.77 | 26.80 |
| Aluminium-Silikat (WAK = 128) | 2.0 | 2.0 | 2.0 | 2.0 |
| Calcium-Aluminium-Silikat (WAK = 142) | 18.0 | 18.0 | 8.0 | 8.0 |
| Cellulosefaser | 0.60 | 0.60 | 0.60 | 0.60 |
| Erhärtungsbeschleuniger | 1.0 | 1.0 | 1.0 | 1.0 |
| Celluloseether (Visk: 10'000 mPas) | 0.6 | 0.6 | 0.6 | 0.6 |
| Dispersionspulver (Elotex FX3300) | 4.0 | 4.0 | 4.0 | 4.0 |
| Abbindeverzögerer 1 | 0.03 | | 0.03 | |
| Vormischung 4 | | | 3.0 | 3.0 |
| Anmachwasser | 55.0 | 55.0 | 52.0 | 52.0 |
| Leichtfüllstoff auf Trockenmörtel [%] | 20.0 | 20.0 | 12.81 | 12.81 |
| Abbindeverzögerer auf Trockenmörtel [%] | 0.03 | 0 | 0.09 | 0.06 |
| Celluloseether auf Trockenmörtel [%] | 0.6 | 0.6 | 0.69 | 0.69 |
| Verhältnis Leichtfüllstoff zu CE | 33.3 | 33.3 | 18.56 | 18.56 |
| Verhältnis Abbindeverzögerer zu CE | 0.05 | 0 | 0.13 | 0.09 |
| Anrührverhalten | Gut | Gut | Gut | Gut |
| Konsistenz | Leicht, sämig | Leicht, sämig | Leicht, sämig | Leicht, sämig |
| Verarbeitbarkeit | Gut | Gut | Gut | Gut |

(fortgesetzt)

| | | V-Bsp. 5 | V-Bsp. 5a | Bsp.5 | Bsp.5a |
|---|---|---|---|---|---|
| Haftzugfestigkeiten (CEN EN 1348) [N/mm$^2$] | trocken (28d) | 0.90 | 1.02 | 0.97 | 1.11 |
| | nass (7+21d) | 0.46 | 0.52 | 0.52 | 0.66 |
| OT (CEN EN 1346) | 1 d | 0.34 | 0.35 | 0.33 | 0.46 |
| EZ 30 min [N/mm$^2$] | 28 d | 0.75 | 0.82 | 0.68 | 0.85 |
| Horizontale Deformation (CEN TC67/WG) | Höchstkraft [N] | 4.62 | 1.23 | 5.23 | 5.40 |
| | Verformbarkeit [mm] | 2.59 | 1.43 | 2.44 | 2.50 |
| Korrigierbarkeit (DIN 18156 Teil 3) [min] | | 15 | 15 | 20 | 20 |
| Ergiebigkeit [g/cm$^3$] | | 0.79 | 0.79 | 0.87 | 0.88 |

Vergleichsbeispiel (V-Bsp.) 6 und Beispiel (Bsp.) 6:

| | | V-Bsp. 6 | Bsp. 6 |
|---|---|---|---|
| Portland Cement Cem I 52.5 | | 50.0 | 50.0 |
| Microzement | | 4.0 | 4.0 |
| Quarzsand 0.1 - 0.3mm | | 19.77 | 26.97 |
| Aluminium-Silikat (WAK = 128) | | 2.0 | 2.0 |
| Calcium-Aluminium-Silikat (WAK = 142) | | 18.0 | 8.0 |
| Cellulosefaser | | 0.60 | 0.60 |
| Erhärtungsbeschleuniger | | 1.0 | 1.0 |
| Celluloseether (Visk: 10'000 mPas) | | 0.6 | 0.4 |
| Dispersionspulver (Elotex FX3300) | | 4.0 | 4.0 |
| Abbindeverzögerer 1 | | 0.03 | 0.03 |
| Vormischung 5 | | | 3.0 |
| Anmachwasser | | 60.0 | 59.0 |
| Leichtfüllstoff auf Trockenmörtel [%] | | 20.0 | 12.81 |
| Abbindeverzögerer auf Trockenmörtel [%] | | 0.03 | 0.09 |
| Celluloseether auf Trockenmörtel [%] | | 0.6 | 0.49 |
| Verhältnis Leichtfüllstoff zu CE | | 33.3 | 26.13 |
| Verhältnis Abbindeverzögerer zu CE | | 0.05 | 0.18 |
| Anrührverhalten | | Gut | Gut |
| Konsistenz | | Leicht, sämig | Leicht, sämig |
| Verarbeitbarkeit | | Gut | Gut |
| Haftzugfestigkeiten (CEN EN 1348) [N/mm$^2$] | trocken (28d) | 0.88 | 0.91 |
| | nass (7+21d) | 0.67 | 0.69 |
| OT (CEN EN 1346) EZ 30 min [N/mm$^2$] | 1 d | 0.49 | 0.44 |
| | 28 d | 0.53 | 0.54 |
| Horizontale Deformation (CEN TC67/WG) | Höchstkraft [N] | 4.64 | 4.95 |
| | Verformbarkeit [mm] | 2.35 | 2.24 |

(fortgesetzt)

| | V-Bsp. 6 | Bsp. 6 |
|---|---|---|
| Ergiebigkeit [g/cm$^3$] | 0.83 | 0.86 |

**Vergleichsbeispiel (V-Bsp.) 7 und Beispiel (Bsp.) 7 und 7a:**

| | | V-Bsp.7 | Bsp.7 | Bsp.7a |
|---|---|---|---|---|
| Portland Cement Cem I 52.5 | | 55.0 | 55.0 | 55.0 |
| Microzement | | 4.0 | 4.0 | 4.0 |
| Quarzsand 0.1- 0.3mm | | 14.4 | 27.9 | 27.1 |
| Aluminium-Silikat (WAK = 128) | | 2.0 | | |
| Calcium-Aluminium-Silikat (WAK = 142) | | 18.0 | | |
| Cellulosefaser | | 1.0 | 1.0 | 1.0 |
| Erhärtungsbeschleuniger | | 1.0 | 1.0 | 1.0 |
| Celluloseether (Visk: 10'000 mPas) | | 0.6 | 0.6 | 0.6 |
| Dispersionspulver (Elotex FX3300) | | 4.0 | 4.0 | 4.0 |
| Vormischung 6 | | | 6.5 | |
| Vormischung 7 | | | | 7.3 |
| Anmachwasser | | 59.0 | 59.0 | 59.0 |
| Leichtfüllstoff auf Trockenmörtel [%] | | 20.0 | 6.21 | 6.96 |
| Abbindeverzögerer auf Trockenmörtel [%] | | 0.0 | 0.10 | 0.11 |
| Celluloseether auf Trockenmörtel [%] | | 0.6 | 0.70 | 0.71 |
| Verhältnis Leichtfüllstoff zu CE | | 33.3 | 8.87 | 9.80 |
| Verhältnis Abbindeverzögerer zu CE | | 0.0 | 0.14 | 0.15 |
| Anrührverhalten | | Gut, dünne Konsistenz | Gut, dünne Konsistenz | Gut, dünne Konsistenz |
| Konsistenz | | Leicht, sämig verdickt leicht | Leicht, sämig verdickt leicht | Leicht, sämig verdickt leicht |
| Verarbeitbarkeit | | Gut | Gut | Gut |
| Haftzugfestigkeiten (CEN EN 1348) [N/mm$^2$] | trocken (28d) | 0.99 | 0.98 | 0.97 |
| | nass (7+21d) | 0.70 | 0.63 | 0.50 |
| OT (CEN EN 1346) EZ 30 min [N/mm$^2$] | 1 d | 0.41 | 0.39 | 0.33 |
| | 28 d | 0.69 | 0.69 | 0.73 |
| Horizontale Deformation (CEN TC67/WG) | Höchstkraft [N] | 4.99 | 5.54 | 5.73 |
| | Verformbarkeit [mm] | 2.41 | 2.37 | 2.53 |
| Korrigierbarkeit (DIN 18156 Teil 3) [min] | | 10 | 15 | 20 |
| Ergiebigkeit [g/cm$^3$] | | 0.69 | 0.85 | 0.85 |

**Patentansprüche**

**1.** Hydraulisch abbindende Mörtelzusammensetzung, enthaltend mindestens eine hydraulisch abbindende Komponente, mindestens einen Leichtfüllstoff, mindestens einen Celluloseether, mindestens einen Abbindeverzögerer, sowie gegebenenfalls weitere zusätzliche Additive, insbesondere Füllstoffe und Dispersionspulver, **dadurch gekennzeichnet, dass**

a. bei einem Anmachwasserbedarf von etwa 20 bis 45 Gew%, bezogen auf den Trockengehalt der Mörtelzusammensetzung,

a1 das Gewichtsverhältnis von Leichtfüllstoff zu Celluloseether etwa 0.001 : 1 bis 10 : 1 und
a2 das Gewichtsverhältnis von Abbindeverzögerer zu Celluloseether etwa 0.3 : 1 bis 10 : 1 beträgt und

b. bei einem Anmachwasserbedarf von etwa 45% bis 100 Gew%, bezogen auf den Trockengehalt der Mörtelzusammensetzung,

b1 das Gewichtsverhältnis von Leichtfüllstoff zu Celluloseether etwa 0.01 : 1 bis 30 : 1 und
b2 das Gewichtsverhältnis von Abbindeverzögerer zu Celluloseether 0.07 : 1 bis 10 : 1 beträgt und

c. der eingesetzte Leichtfüllstoff ein Schüttgewicht von kleiner als etwa 600 g/ l hat und bei Raumtemperatur eine Wasseraufnahmekapazität von etwa 80 Gew% oder mehr besitzt.

2. Hydraulisch abbindende Mörtelzusammensetzung nach Anspruch 1, **dadurch gekennzeichnet, dass** der Anteil an hydraulisch abbindender Komponente etwa 5 bis 70 Gew%, insbesondere etwa 10 bis 60 Gew%, an Leichtfüllstoff etwa 0.1 bis 25 Gew%, insbesondere etwa 0.5 bis 20 Gew%, an Celluloseether etwa 0.02 bis 3.0 Gew%, insbesondere etwa 0.05 bis 2.0 Gew%, an Abbindeverzögerer etwa 0.01 bis 2 Gew%, insbesondere etwa 0.02 bis 1 Gew%, an Füllstoff etwa 0 bis 70 Gew%, insbesondere etwa 10 bis 60 Gew% und/ oder an Dispersionspulver etwa 0 bis 25 Gew%, insbesondere etwa 0.5 bis 20 Gew%, jeweils bezogen auf die trockene Mörtelzusammensetzung, beträgt.

3. Hydraulisch abbindende Mörtelzusammensetzung nach mindestens einem der vorhergehenden Ansprüche, **dadurch gekennzeichnet, dass** die hydraulisch abbindende Komponente Portlandzement und/ oder Calciumsulfat und/ oder Tonerdeschmelzzement, der Füllstoff Quarzsand und/ oder Calciumcarbonat ist und das Dispersionspulver in Form eines oder mehrerer Homo- und/ oder Copolymeren auf Basis von $C_1$- bis $C_{20}$- Vinylester, insbesondere von $C_1$- bis $C_{12}$-Vinylester, Ethylen, Vinylchlorid, $C_1$- bis $C_{20}$- Alkylester der (Meth)Acrylsäure, insbesondere von $C_1$- bis $C_{12}$- Alkylester der (Meth)Acrylsäure, Acrylamid, Acrylnitril, Styrol, Styrol-Derivaten und/ oder Butadien vorliegt.

4. Hydraulisch abbindende Mörtelzusammensetzung nach mindestens einem der vorhergehenden Ansprüche, **dadurch gekennzeichnet, dass** der Abbindeverzögerer eine $C_3$- bis $C_{20}$-Polyhydroxyverbindung, insbesondere eine $C_4$- bis $C_{12}$-Polyhydroxyverbindung, ein Phosphat, insbesondere ein Alkaliphosphat und/ oder Calciumphosphat, eine organische Carbonsäure und/oder deren Alkali-, Erdalkali-, Ammonium- und/ oder Triethanolammoniumsalz ist.

5. Hydraulisch abbindende Mörtelzusammensetzung nach Anspruch 4, **dadurch gekennzeichnet, dass** die organische Carbonsäure eine $C_3$- bis $C_{20}$- Carbonsäure, insbesondere eine $C_4$- bis $C_{12}$- Carbonsäure ist.

6. Hydraulisch abbindende Mörtelzusammensetzung nach Anspruch 4 und 5, **dadurch gekennzeichnet, dass** die organische Carbonsäure Zitronensäure, Weinsäure, Adipinsäure, Gluconsäure und/ oder Heptansäure ist.

7. Hydraulisch abbindende Mörtelzusammensetzung nach mindestens einem der vorhergehenden Ansprüche, **dadurch gekennzeichnet, dass** ein Leichtfüllstoff auf synthetischer oder natürlicher Basis in Form von Mikrohohlkugeln aus Glas, Polymeren, Aluminium-Silikat, Calcium-Silikathydrat, Calcium-Metasilikat, Calcium-Aluminium-Silikat und/ oder Aluminium-Siliciumoxid vorliegt.

8. Hydraulisch abbindende Mörtelzusammensetzung nach mindestens einem der vorhergehenden Ansprüche, **dadurch gekennzeichnet, dass** das Schüttgewicht des Leichtfüllstoffs kleiner als 500 g/ l, insbesondere kleiner als 400 g/ | ist.

9. Hydraulisch abbindende Mörtelzusammensetzung nach mindestens einem der vorhergehenden Ansprüche, **dadurch gekennzeichnet, dass** die Mörtelzusammensetzung bei einem Anmachwasserbedarf von etwa 20 bis 45 Gew%, bezogen auf den Trockengehalt der Mörtelzusammensetzung den Leichtfüllstoff in einer Menge von etwa 0.1 bis 5 Gew%, insbesondere etwa 0.2 bis 3 Gew%, bezogen auf die trockene Mörtelzusammensetzung, enthält, und bei einem Anmachwasserbedarf von etwa 45 bis 100 Gew%, bezogen auf den Trockengehalt der Mörtelzusammensetzung den Leichtfüllstoff in einer Menge von etwa 1 bis 15 Gew%, insbesondere etwa 2 bis 10 Gew%, bezogen auf die gesamte trockene Mörtelzusammensetzung, enthält.

**10.** Hydraulisch abbindende Mörtelzusammensetzung nach mindestens einem der vorhergehenden Ansprüche, **dadurch gekennzeichnet, dass** der eingesetzte Leichtfüllstoff bei Raumtemperatur eine Wasseraufnahmekapazität von etwa 100 Gew% oder mehr, insbesondere von etwa 120 Gew% oder mehr besitzt.

**11.** Hydraulisch abbindende Mörtelzusammensetzung nach mindestens einem der vorhergehenden Ansprüche, **dadurch gekennzeichnet, dass** der oder mindestens einer der eingesetzten Leichtfüllstoffe eine plättchen-, stäbchenund/ oder eine lamellenförmige Struktur aufweist.

**12.** Hydraulisch abbindende Mörtelzusammensetzung nach mindestens einem der vorhergehenden Ansprüche, **dadurch gekennzeichnet, dass** der Celluloseether ein Alkylhydroxyalkylcelluloseether und/ oder ein Alkylcelluloseether ist.

**13.** Hydraulisch abbindende Mörtelzusammensetzung nach Anspruch 12, **dadurch gekennzeichnet, dass** die Alkyl-Gruppen des Alkylhydroxyalkylcelluloseethers und/ oder des Alkylcelluloseethers Methyl-, Ethyl- und/ oder Propyl-Gruppen sind und die Hydroxyalkyl- Gruppen des Alkylhydroxyalkylcelluloseethers Hydroxymethyl-, Hydroxyethyl- und/ oder Hydroxypropyl- Gruppen sind.

**14.** Hydraulisch abbindende Mörtelzusammensetzung nach mindestens einem der vorhergehenden Ansprüche, **dadurch gekennzeichnet, dass** der Celluloseether als 2%ige wässrige Lösung bei 20°C eine Brookfieldviskosität (gemessen bei 20RPM) von etwa 1000 bis 100'000 mPas, insbesondere von etwa 5000 bis 75'000 mPas besitzt.

**15.** Hydraulisch abbindende Mörtelzusammensetzung nach mindestens einem der vorhergehenden Ansprüche, **dadurch gekennzeichnet, dass** der Celluloseether oder ein Teil davon durch eine Celluloseether-ähnliche Verbindung ersetzt wird, wobei die Celluloseether-ähnliche Verbindung ein Alkylhydroxyalkyl-modifiziertes Polysaccharid ist, insbesondere Alkylhydroxyalkylguarether, und/ oder ein Heteropolysaccharid ist, insbesondere Xanthan Gum und/ oder Wellan Gum.

**16.** Hydraulisch abbindende Mörtelzusammensetzung nach mindestens einem der vorhergehenden Ansprüche, **dadurch gekennzeichnet, dass**

    a. bei einem Anmachwasserbedarf von etwa 20 bis 45 Gew%, bezogen auf den Trockengehalt der Mörtelzusammensetzung,

    a1 das Gewichtsverhältnis von Leichtfüllstoff zu Celluloseether von etwa 0.01 : 1 bis 7.5 : 1, insbesondere von etwa 0.1 : 1 bis 5:1, und
    a2 das Gewichtsverhältnis von Abbindeverzögerer zu Celluloseether von etwa 0.4 : 1 bis 7.5 : 1, insbesondere von etwa 0.5 : 1 bis 5 : 1, beträgt und

    b. bei einem Anmachwasserbedarf von etwa 45 bis 100 Gew% oder mehr, bezogen auf den Trockengehalt der Mörtelzusammensetzung,

    b1 das Gewichtsverhältnis von Leichtfüllstoff zu Celluloseether von etwa 0.1 : 1 bis 25 : 1, insbesondere von etwa 1 : 1 bis 15 : 1, und
    b2 das Gewichtsverhältnis von Abbindeverzögerer zu Celluloseether von etwa 0.09 : 1 bis 7.5 : 1, insbesondere von etwa 0.12 : 1 bis 5 : 1, beträgt.

**17.** Hydraulisch abbindende Mörtelzusammensetzung nach mindestens einem der vorhergehenden Ansprüche, **dadurch gekennzeichnet, dass** die weiteren Additive in Form von Füllstoffen, Dispersionspulvern, Stärkeethern, Guarethern, Polycarboxylaten, Polyacrylamiden, Cellulosefasern, Luftporenbildnern, Schichtsilikaten, Puzzolanen, insbesondere Metakaolin, Abbindebeschleunigern, latenthydraulischen Komponenten und/ oder Verdickungsmitteln vorliegen.

**18.** Verwendung der hydraulisch abbindenden Mörtelzusammensetzung nach mindestens einem der vorhergehenden Ansprüche als Gips-, Gips-Kalk-, Kalk-Zement-, Zement- und/ oder Thermoputz, Fliesenkleber, Mauermörtel, Vollwärmeschutzmörteln, Spachtelmassen, Selbstnivellierenden Fussbodenmassen oder Reparaturmörtel.

19. Vormischung zur Herstellung einer hydraulisch abbindenden Mörtelzusammensetzung **dadurch gekennzeichnet, dass** die Vormischung mindestens einen Leichtfüllstoff und mindestens einen Celluloseether und/ oder mindestens einen Abbindeverzögerer, enthält, wobei

    a. das Gewichtsverhältnis von Leichtfüllstoff zu Celluloseether etwa 0.001 : 1 bis 100 : 1, insbesondere etwa 0.01 : 1 bis 75 : 1, und/ oder

    b. das Gewichtsverhältnis von Leichtfüllstoff zu Abbindeverzögerer etwa 0.01 : 1 bis 100 : 1, insbesondere etwa 0.1 : 1 bis 75 : 1, beträgt und

    c. der eingesetzte Leichtfüllstoff ein Schüttgewicht von kleiner als etwa 600 g/ l hat und bei Raumtemperatur eine Wasseraufnahmekapazität von etwa 80 Gew%, insbesondere von etwa 100 Gew% oder mehr, besitzt.

20. Vormischung zur Herstellung einer hydraulisch abbindenden Mörtelzusammensetzung nach Anspruch 19, **dadurch gekennzeichnet, dass** die Vormischung mindestens einen Leichtfüllstoff, mindestens einen Celluloseether und mindestens einen Abbindeverzögerer, enthält, wobei das Gewichtsverhältnis von Abbindeverzögerer zu Celluloseether etwa 0.07 : 1 bis 10 : 1, insbesondere etwa 0.12 : 1 bis 7.5 : 1, beträgt.

21. Vormischung nach Anspruch 19 oder 20, **dadurch gekennzeichnet, dass** die Vormischung weitere Additive enthält, insbesondere ein oder mehrere Dispersionspulver, Füllstoffe, Stärkeether, Guarether, Polycarboxylate, Polyacrylamide, Cellulosefaser, Luftporenbildner, Schichtsilikate, Puzzolane wie Metakaolin, Abbindebeschleuniger, latenthydraulische Komponenten und/ oder Verdickungsmittel.

22. Verfahren zur Herstellung einer Vormischung nach mindestens einem der Ansprüche 19 bis 21, **dadurch gekennzeichnet, dass** Leichtfüllstoff, Celluloseether, Abbindeverzögerer, und/ oder Dispersionspulver, sowie gegebenenfalls weitere Additive, miteinander vermischt werden, wobei ein Teil oder der ganze Anteil, bezogen auf die hydraulisch abbindende Mörtelzusammensetzung, an Leichtfüllstoff, an Celluloseether, an Abbindeverzögerer und/ oder an Dispersionspulver in der Vormischung enthalten ist, und die Vormischung zur Herstellung von hydraulisch abbindenden Mörtelzusammensetzungen nach mindestens einem der vorhergehenden Ansprüche verwendet wird,

23. Verwendung der Vormischung nach mindestens einem der Ansprüche 19 bis 21 in Gips-, Gips-Kalk-, Kalk-Zement-, Zement- und/ oder Thermoputzen, Fliesenkleber, Mauermörtel, Vollwärmeschutzmörteln, Spachtelmassen, Selbstnivellierenden Fussbodenmassen oder Reparaturmörtel.